# FASCICULE DE BREVET EUROPEEN

(11) **EP 2 957 705 B1**
(45) Date de publication et mention de la délivrance du brevet: **28.12.2016**
(21) Numéro de dépôt: 15172240.2
(22) Date de dépôt: 16.06.2015
(51) Int. Cl.: E06B 9/322, E06B 9/72, E06B 9/88, E06B 9/90

(54) **ACTIONNEUR ÉLECTROMÉCANIQUE ET INSTALLATION DOMOTIQUE COMPRENANT UN TEL ACTIONNEUR**
ELEKTROMECHANISCHES STELLGLIED UND HEIMINSTALLATION, DIE EIN SOLCHES STELLGLIED UMFASST
ELECTROMECHANICAL ACTUATOR AND HOME AUTOMATION EQUIPMENT COMPRISING SUCH AN ACTUATOR

(30) Priorité: 17.06.2014 FR 1455553
(43) Date de publication de la demande: 23.12.2015
(73) Titulaire: Somfy SAS, 74300 Cluses (FR)
(72) Inventeur: BRONDEX, Adrien, 74700 DOMANCY (FR)
(74) Mandataire: Lavoix

(56) Documents cités:
- EP-A1- 0 810 347
- EP-A1- 2 267 330
- FR-A1- 2 610 668
- FR-A1- 2 995 001

## Description

La présente invention concerne un actionneur électromécanique. L'actionneur électromécanique comprend un frein à ressort. Ce type de frein à ressort est plus particulièrement adapté pour un actionneur électromécanique dit tubulaire.

La présente invention concerne également une installation domotique de fermeture ou de protection solaire comprenant un écran enroulable sur un tube d'enroulement entraîné en rotation par un tel actionneur électromécanique.

De manière générale, la présente invention concerne le domaine des dispositifs d'occultation comprenant un dispositif d'entraînement motorisé mettant en mouvement un écran entre au moins une première position et une deuxième position.

Un dispositif d'entraînement motorisé comprend un actionneur électromécanique d'un élément mobile de fermeture, d'occultation ou de protection solaire tel qu'un volet, une porte, une grille, un store, ou tout autre matériel équivalent, appelé par la suite écran.

On connaît déjà le document FR 2 610 668 A1 qui correspond au préambule de la revendication 1 et qui décrit un actionneur électromécanique pour une installation domotique de fermeture ou de protection solaire comprenant un moteur électrique, un réducteur et un frein à ressort.

Le frein à ressort comprend un ressort hélicoïdal, un tambour, un organe d'entrée et un organe de sortie.

Chaque extrémité du ressort hélicoïdal forme une patte s'étendant radialement par rapport à un axe de rotation du frein à ressort.

Le tambour comporte un logement de forme cylindrique. Et une surface interne de frottement du logement du tambour coopère avec au moins une spire du ressort hélicoïdal. De cette manière, au moins une spire du ressort hélicoïdal est contrainte radialement par le logement du tambour.

L'organe d'entrée est entraîné en rotation par le moteur électrique. L'organe d'entrée coopère avec l'une des pattes du ressort hélicoïdal, de sorte à entraîner en rotation le ressort hélicoïdal autour de l'axe de rotation du frein à ressort dans un premier sens de rotation. Un tel mouvement libère le frein à ressort. Et l'effort de frottement entre les spires du ressort hélicoïdal et la surface interne de frottement du logement du tambour est diminué lors de l'entraînement en rotation du ressort hélicoïdal dans le premier sens de rotation. Autrement dit, ce mouvement tend à diminuer le diamètre de l'enveloppe externe du ressort hélicoïdal et donc à diminuer la contrainte radiale entre le ressort hélicoïdal et la surface interne de frottement du logement du tambour.

L'organe de sortie coopère avec l'une des pattes du ressort hélicoïdal, de sorte à entraîner en rotation le ressort hélicoïdal autour de l'axe de rotation du frein à ressort dans un deuxième sens de rotation, le deuxième sens de rotation étant opposé au premier sens de rotation. Un tel mouvement active le frein à ressort. Et l'effort de frottement entre les spires du ressort hélicoïdal et la surface interne de frottement du logement du tambour est augmenté lors de l'entraînement en rotation du ressort hélicoïdal dans le deuxième sens de rotation. Autrement dit, ce mouvement tend à augmenter le diamètre de l'enveloppe externe du ressort hélicoïdal et donc à augmenter la contrainte radiale entre le ressort hélicoïdal et la surface interne de frottement du logement du tambour.

Cependant, cet actionneur électromécanique présente l'inconvénient de générer des bruits de fonctionnement liés aux frottements d'une surface externe de l'organe d'entrée et/ou de l'organe de sortie contre la surface interne de frottement du logement du tambour.

Les frottements non souhaités entre la surface externe de l'organe d'entrée et/ou de l'organe de sortie et la surface interne de frottement du logement du tambour lors de l'entraînement en rotation de l'organe d'entrée et/ou de l'organe sortie à l'intérieur du logement du tambour sont provoqués par un défaut d'alignement de l'organe d'entrée et/ou de l'organe de sortie par rapport à l'axe de rotation du frein à ressort.

Les frottements entre la surface externe de l'organe d'entrée et/ou de l'organe de sortie et la surface interne de frottement du logement du tambour sont générés par un contact du métal constituant l'organe d'entrée et l'organe de sortie, en particulier en zamac (acronyme des noms des métaux qui le composent : zinc, aluminium, magnésium et cuivre), avec le métal constituant le tambour, en particulier un acier fritté.

Par conséquent, de tels frottements entre la surface externe de l'organe d'entrée et/ou de l'organe de sortie et la surface interne de frottement du logement du tambour nuisent au niveau acoustique de l'actionneur électromécanique lors de son fonctionnement.

La présente invention a pour but de résoudre les inconvénients précités et de proposer un actionneur électromécanique pourvu d'un frein à ressort permettant de réduire les bruits de fonctionnement du frein à ressort lors de l'entraînement en rotation de l'organe d'entrée et/ou l'organe de sortie à l'intérieur du logement du tambour.

A cet égard, la présente invention vise, selon un premier aspect, un actionneur électromécanique pour une installation domotique de fermeture ou de protection solaire comprenant un moteur électrique, un réducteur, un frein à ressort, ledit frein à ressort comprenant :
- un ressort hélicoïdal,
- un tambour, où le tambour comporte un logement, et où une surface interne de frottement du logement du tambour coopère avec au moins une spire du ressort hélicoïdal ;
- un organe d'entrée ;
- un organe de sortie.

Selon l'invention, le frein à ressort comprend également au moins une bague disposée entre une surface externe de l'organe d'entrée et/ou de l'organe de sortie et la surface interne de frottement du logement du tambour.

Ainsi, ladite au moins une bague disposée entre la surface externe de l'organe d'entrée et/ou de l'organe de sortie et la surface interne de frottement du logement du tambour permet de réduire les bruits de fonctionnement du frein à ressort lors de l'entraînement en rotation de l'organe d'entrée et/ou de l'organe de sortie à l'intérieur du logement du tambour.

De cette manière, ladite au moins une bague permet de s'affranchir des bruits de fonctionnement du frein à ressort liés aux frottements de la surface externe de l'organe d'entrée et/ou de l'organe de sortie contre la surface interne de frottement du logement du tambour puisque l'organe d'entrée et/ou l'organe de sortie ne peuvent plus être en contact direct avec la surface interne de frottement du logement du tambour.

Par conséquent, ladite au moins une bague disposée entre la surface externe de l'organe d'entrée et/ou de l'organe de sortie et la surface interne de frottement du logement du tambour permet le coulissement sans contact direct de l'organe d'entrée et/ou de l'organe de sortie contre le logement du tambour, lors de l'entraînement en rotation de l'organe d'entrée et/ou de l'organe de sortie par rapport au logement du tambour.

De cette manière, ladite au moins une bague disposée entre la surface externe de l'organe d'entrée et/ou de l'organe de sortie et la surface interne de frottement du logement du tambour sert de palier entre l'organe d'entrée et/ou l'organe de sortie et le logement du tambour.

En outre, ladite au moins une bague disposée entre la surface externe de l'organe d'entrée et/ou de l'organe de sortie et la surface interne de frottement du logement du tambour permet de rattraper les défauts d'alignement de l'organe d'entrée et/ou de l'organe de sortie par rapport à l'axe de rotation du frein à ressort, de sorte à éviter la mise en contact de l'organe d'entrée et de l'organe de sortie avec la surface interne de frottement du logement du tambour pouvant générer des bruits de fonctionnement du frein à ressort.

Pratiquement, ladite au moins une bague est en matière plastique.

Selon une caractéristique préférée de l'invention, l'organe d'entrée et/ou l'organe de sortie comprend un logement, et ladite au moins une bague est disposée au niveau dudit logement.

Préférentiellement, le logement de l'organe d'entrée et/ou de l'organe de sortie est un épaulement, et ladite au moins une bague est maintenue en position suivant l'axe de rotation du frein à ressort entre l'épaulement de l'organe d'entrée et/ou de l'organe de sortie et un épaulement du tambour.

Selon une autre caractéristique préférée de l'invention, ladite au moins une bague présente une épaisseur supérieure à la profondeur du logement ménagé dans l'organe d'entrée et/ou dans l'organe de sortie, et l'une des faces latérales de la bague coopère avec l'épaulement du tambour.

Selon une autre caractéristique préférée de l'invention, le tambour, l'organe d'entrée et l'organe de sortie sont des pièces de révolution, et le diamètre externe de ladite au moins une bague est supérieur aux diamètres externes de l'organe d'entrée et de l'organe de sortie.

Pratiquement, l'organe d'entrée et l'organe de sortie sont réalisés en zamac et le tambour est réalisé en acier, notamment en acier fritté.

Selon une autre caractéristique préférée de l'invention, le diamètre interne du logement du tambour au niveau de la surface interne de frottement du logement du tambour est supérieur au diamètre externe de ladite au moins une bague.

La présente invention vise, selon un deuxième aspect, une installation domotique de fermeture ou de protection solaire comprenant un écran enroulable sur un tube d'enroulement entraîné en rotation par un actionneur électromécanique conforme à l'invention.

Cette installation domotique présente des caractéristiques et avantages analogues à ceux décrits précédemment en relation avec l'actionneur électromécanique tel que mentionné ci-dessus.

D'autres particularités et avantages de l'invention apparaîtront encore dans la description ci-après.

Aux dessins annexés, donnés à titre d'exemples non limitatifs :
- la figure 1 est une vue schématique en coupe d'une installation domotique conforme à un mode de réalisation de l'invention ;
- la figure 2 est une vue schématique en perspective de l'installation domotique illustrée à la figure 1 ;
- la figure 3 est une vue schématique partielle en coupe de l'installation domotique illustrée à la figure 2 comprenant un actionneur électromécanique ;
- la figure 4 est une vue éclatée schématique d'un frein à ressort de l'actionneur électromécanique illustré à la figure 3 ;
- la figure 5 est une vue schématique en coupe du frein à ressort illustré à la figure 4 ;
- la figure 6 est une vue schématique en perspective du frein à ressort illustré aux figures 4 et 5, où le tambour du frein à ressort a été ôté ;
- la figure 7 est une vue schématique de face du frein à ressort tel qu'illustré à la figure 6.

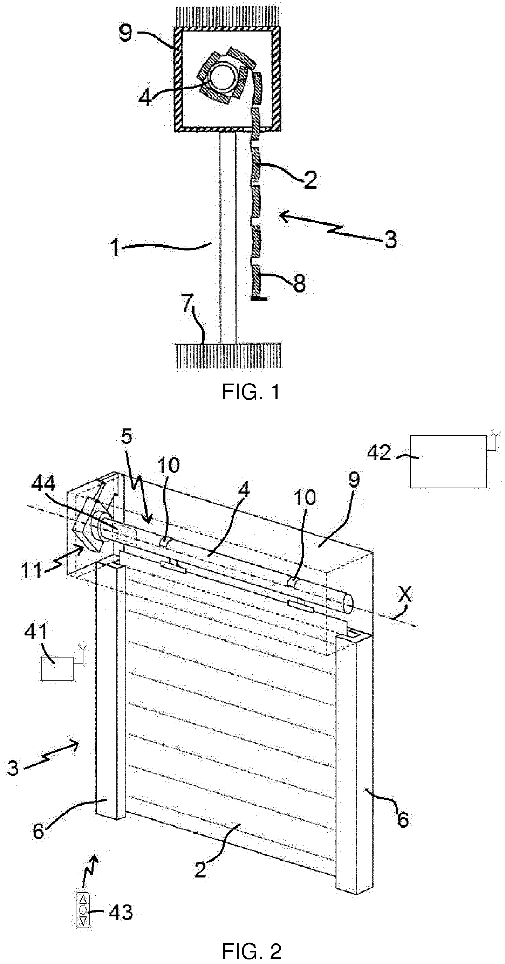

On va décrire tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, comme illustré sur les figures 1 et 2, un store en toile ou avec des lames orientables, ou encore un portail roulant. La présente invention s'applique à tous les types de dispositif d'occultation.

L'écran 2 du dispositif d'occultation 3 est enroulé sur un tube d'enroulement 4 entraîné par un mécanisme d'entraînement motorisé 5 et mobile entre une position enroulée, en particulier haute, et une position déroulée, en particulier basse.

Le mécanisme d'entraînement motorisé 5 comprend un actionneur électromécanique 11, en particulier de type tubulaire, permettant de mettre en rotation le tube d'enroulement 4 du dispositif d'occultation 3 de sorte à dérouler ou enrouler l'écran 2 du dispositif d'occultation 3.

Dans l'état monté, l'actionneur électromécanique 11 est inséré dans le tube d'enroulement 4.

L'actionneur électromécanique 11 comprend un carter 13, préférentiellement de forme cylindrique.

De manière connue, un volet roulant 3 comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8 en forme de L du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du volet roulant 3, opposée à la lame d'extrémité, est reliée au tube d'enroulement 4 au moyen d'au moins une articulation 10.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

Le mécanisme d'entraînement motorisé 5 est commandé par une unité de commande. L'unité de commande peut être par exemple une unité de commande locale 41, où l'unité de commande locale 41 peut être reliée en liaison filaire ou non filaire avec une unité de commande centrale 42. L'unité de commande centrale 42 pilote l'unité de commande locale 41, ainsi que d'autres unités de commande locales similaires et réparties dans le bâtiment.

L'unité de commande centrale 42 peut être en communication avec une station météorologique déportée à l'extérieur du bâtiment, incluant notamment un ou plusieurs capteurs pouvant être configurés pour déterminer, par exemple, une température, une luminosité, ou encore une vitesse de vent.

Une télécommande 43, pouvant être un type d'unité de commande locale, et pourvue d'un clavier de commande, qui comprend des moyens de sélection et d'affichage, permet en outre à un utilisateur d'intervenir sur l'actionneur électromécanique 11, l'unité de commande locale 41 et/ou l'unité de commande centrale 42.

Le mécanisme d'entraînement motorisé 5 est, de préférence, configuré pour exécuter les commandes de déroulement ou d'enroulement de l'écran 2 du dispositif d'occultation 3, pouvant être émises notamment par la télécommande 43.

Des moyens de commande de l'actionneur électromécanique 11 conforme à l'invention, permettant le déplacement de l'écran 2 du dispositif d'occultation 3, sont constitués par au moins une unité électronique de contrôle 44. Cette unité électronique de contrôle 44 est apte à mettre en fonctionnement un moteur électrique 12 de l'actionneur électromécanique 11, et en particulier permettre l'alimentation en énergie électrique du moteur électrique 12.

Ainsi, l'unité électronique de contrôle 44 commande, notamment, le moteur électrique 12, de sorte à ouvrir ou fermer l'écran 2, comme décrit précédemment.

L'unité électronique de contrôle 44 comprend également un module de réception d'ordres, en particulier d'ordres radioélectriques émis par un émetteur d'ordres, tel que la télécommande 43 destinée à commander l'actionneur électromécanique 11.

Bien entendu, le module de réception d'ordres peut également permettre la réception d'ordres transmis par des moyens filaires.

Ici, et tel qu'illustré à la figure 2, l'unité électronique de contrôle 44 est disposée à l'intérieur du carter 13 de l'actionneur électromécanique 11.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

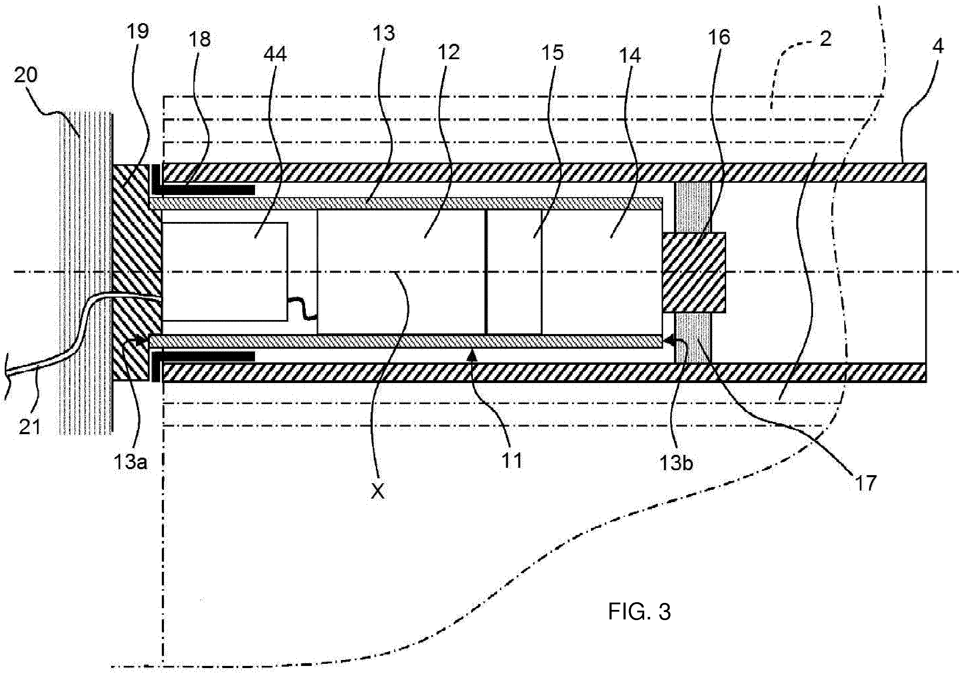

On va décrire à présent, en référence à la figure 3, un actionneur électromécanique conforme à un mode de réalisation de l'invention.

L'actionneur électromécanique 11 est alimenté en énergie électrique par le réseau d'alimentation électrique du secteur, ou encore au moyen d'une batterie, pouvant être rechargée par exemple par un panneau photovoltaïque. L'actionneur électromécanique 11 permet de déplacer l'écran 2 du dispositif d'occultation 3.

L'écran 2 mobile du dispositif d'occultation 3 est un écran de fermeture, d'occultation et/ou de protection solaire, s'enroulant sur le tube d'enroulement 4 dont le diamètre intérieur est sensiblement équivalent au diamètre externe de l'actionneur électromécanique 11, de sorte que l'actionneur électromécanique 11 puisse être inséré dans le tube d'enroulement 4 lors de l'assemblage du dispositif d'occultation 3.

Dans un autre mode de réalisation non représenté, l'actionneur électromécanique 11 est destiné à être placé dans un rail profilé en U.

Le tube d'enroulement 4 est entraîné en rotation autour d'un axe de rotation X et du carter 13 de l'actionneur électromécanique 11 soutenu par l'intermédiaire de deux liaisons pivot. La première liaison pivot est réalisée au niveau d'une première extrémité du tube d'enroulement 4 au moyen d'une couronne 18 insérée autour et à une extrémité 13a du carter 13 de l'actionneur électromécanique 11. La couronne 18 permet ainsi de réaliser un palier. La deuxième liaison pivot, non représentée à la figure 3, est réalisée au niveau d'une deuxième extrémité du tube d'enroulement 4.

L'actionneur électromécanique 11 comprend un support de couple 19. Le support de couple 19 est en saillie à une extrémité 13a du carter 13 de l'actionneur électromécanique 11, en particulier l'extrémité 13a du carter 13 recevant la couronne 18. Le support de couple 19 de l'actionneur électromécanique 11 permet ainsi de fixer l'actionneur électromécanique 11 sur un bâti 20, en particulier à une joue du coffre 9.

En outre, le support de couple 19 de l'actionneur électromécanique 11 peut permettre d'obturer l'extrémité 13a du carter 13.

Par ailleurs, le support de couple 19 de l'actionneur électromécanique 11 peut permettre de supporter l'unité électronique de contrôle 44. L'unité électronique de contrôle 44 peut être alimentée en énergie électrique au moyen d'un câble d'alimentation 21 connecté électriquement au réseau d'alimentation électrique du secteur, ou encore à une batterie.

L'actionneur électromécanique 11 comprend un moteur électrique 12. Le moteur 12 comprend un rotor et un stator positionnés de manière coaxiale autour de l'axe de rotation X.

L'actionneur électromécanique 11 comprend un réducteur 14. Le réducteur 14 comprend au moins un étage de réduction. Ledit au moins un étage de réduction peut être un train d'engrenages de type épicycloïdal.

Bien entendu, le type et le nombre d'étages de réduction du réducteur ne sont nullement limitatifs.

L'actionneur électromécanique 11 comprend un arbre de sortie 16. Une extrémité de l'arbre de sortie 16 est en saillie par rapport au carter 13 de l'actionneur électromécanique 11, en particulier par rapport à une extrémité 13b du carter 13 étant opposée à l'extrémité 13a du carter 13.

L'arbre de sortie 16 de l'actionneur électromécanique 11 entraîne en rotation un élément de liaison 17 relié au tube d'enroulement 4. L'élément de liaison 17 est réalisé sous la forme d'une roue.

Lors de la mise en fonctionnement de l'actionneur électromécanique 11, le moteur électrique 12 et le réducteur 14 entraînent en rotation l'arbre de sortie 16. Et l'arbre de sortie 16 de l'actionneur électromécanique 11 entraîne en rotation le tube d'enroulement 4 par l'intermédiaire de l'élément de liaison 17. Ainsi, le tube d'enroulement 4 entraîne en rotation l'écran 2 du dispositif d'occultation 3 de sorte à ouvrir ou fermer l'ouverture 1.

L'actionneur électromécanique 11 comprend un frein à ressort 15.

Le moteur électrique 12, le réducteur 14 et le frein à ressort 15 sont montés à l'intérieur du carter 13 de l'actionneur électromécanique 11.

Dans le mode de réalisation illustré à la figure 3, le frein à ressort 15 est disposé entre le moteur électrique 12 et le réducteur 14, c'est-à-dire à la sortie du moteur électrique 12.

Dans un autre mode de réalisation non représenté, où le réducteur 14 comprend une pluralité d'étages de réduction, le frein à ressort 15 est disposé entre deux étages de réduction du réducteur 14.

Dans un autre mode de réalisation non représenté, le frein à ressort 15 est disposé à la sortie du réducteur 14.

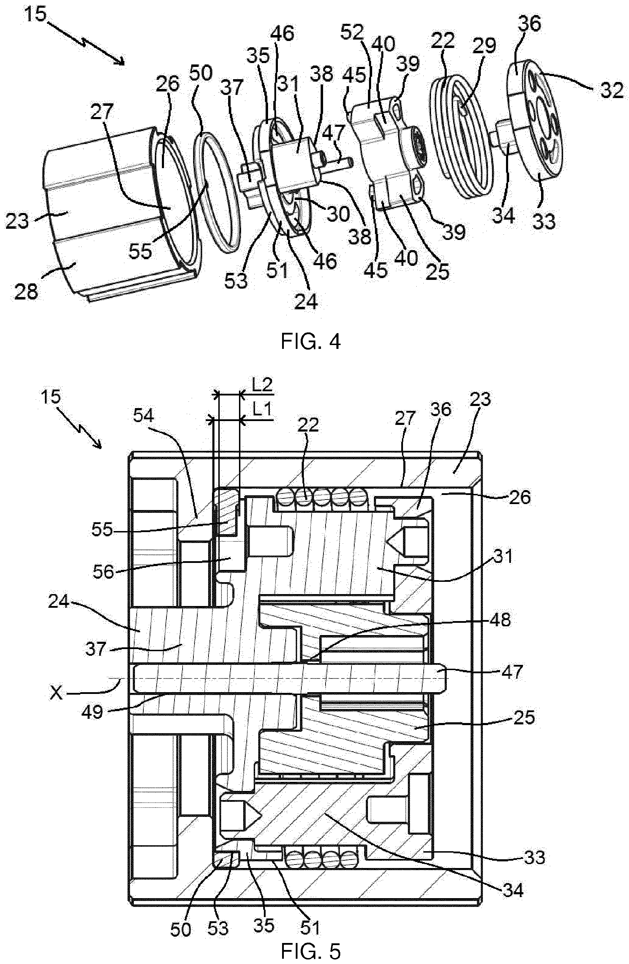

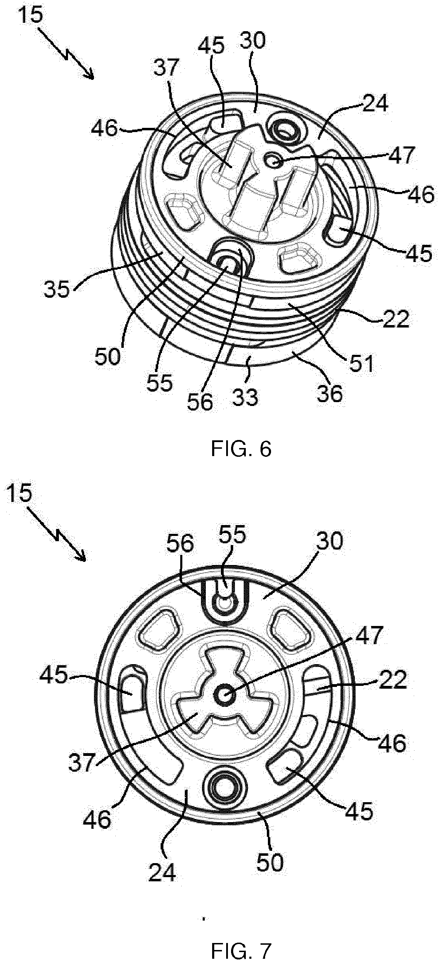

On va décrire à présent, en référence aux figures 4 à 7, un frein à ressort de l'actionneur électromécanique 11 conforme à un mode de réalisation de l'invention.

Le frein à ressort 15 comprend au moins un ressort hélicoïdal 22, un tambour 23, un organe d'entrée 24 et un organe de sortie 25.

Le tambour 23 est maintenu en position dans le carter 13 de l'actionneur électromécanique 11, en particulier au moyen de nervures 28 ménagées sur la périphérie extérieure du tambour 23 coopérant avec des languettes (non représentées) d'un boîtier du réducteur 14. Et le boîtier du réducteur 14 est maintenu en position dans le carter 13 de l'actionneur électromécanique 11.

Le tambour 23 comporte un logement 26. Ici, le logement 26 du tambour 23 est de forme cylindrique.

Le ressort hélicoïdal 22, l'organe d'entrée 24 et l'organe de sortie 25 sont disposés à l'intérieur du logement 26 du tambour 23. L'organe de sortie 25 est disposé en vis-à-vis de l'organe d'entrée 24.

Ici, le ressort hélicoïdal 22 comporte une pluralité de spires. Les spires du ressort hélicoïdal 22 sont centrées sur un axe confondu avec l'axe de rotation X lorsque le frein à ressort 15 est assemblé puis monté dans l'actionneur électromécanique 11. De même, l'organe d'entrée 24 et l'organe de sortie 25 sont centrés sur un axe confondu avec l'axe de rotation X lorsque le frein à ressort 15 est assemblé puis monté dans l'actionneur électromécanique 11.

Une surface interne de frottement 27 du logement 26 du tambour 23 coopère avec au moins une spire du ressort hélicoïdal 22. De cette manière, au moins une spire du ressort hélicoïdal 22 est contrainte radialement par le logement 26 du tambour 23.

Ici, le ressort hélicoïdal 22 est monté serrant à l'intérieur du logement 26 du tambour 23, de sorte à solidariser par friction le ressort hélicoïdal 22 et le tambour 23 lorsque le ressort hélicoïdal 22 est au repos.

Chaque extrémité du ressort hélicoïdal 22 forme une patte 29 s'étendant radialement ou axialement par rapport à l'axe de rotation X du frein à ressort 15.

Ici, le ressort hélicoïdal 22 comporte deux pattes 29, dont une seule est visible à la figure 4.

Dans le mode de réalisation illustré à la figure 4, les pattes 29 du ressort hélicoïdal 22 s'étendent radialement par rapport à l'axe de rotation X du frein à ressort 15 et vers l'intérieur du ressort hélicoïdal 22, notamment depuis les spires du ressort hélicoïdal 22 vers l'axe central du ressort hélicoïdal 22.

L'organe d'entrée 24 est entraîné en rotation par le moteur électrique 12.

Ici, et tel qu'illustré aux figures 4 à 7, l'organe d'entrée 24 comprend un arbre 37. L'arbre 37 de l'organe d'entrée 24 permet de recevoir et de transmettre un couple provenant du moteur électrique 12.

Dans le mode de réalisation illustré aux figures 4 et 5, l'organe d'entrée 24 comprend une dent d'entraînement 31. La dent d'entraînement 31 de l'organe d'entrée 24 est insérée à l'intérieur du ressort hélicoïdal, 22, lorsque le frein à ressort 15 est assemblé.

L'organe d'entrée 24 comprend également un premier plateau 30.

Ici, le premier plateau 30 comprend la dent d'entraînement 31.

La dent d'entraînement 31 de l'organe d'entrée 24 est disposée entre les deux pattes 29 du ressort hélicoïdal 22 et coopère avec l'une ou l'autre des pattes 29 du ressort hélicoïdal, 22, selon le sens de rotation d'entraînement généré par le moteur électrique 12.

La dent d'entraînement 31 de l'organe d'entrée 24 comprend deux faces d'entraînement 38. Chaque face d'entraînement 38 de la dent d'entraînement 31 coopère avec une patte 29 du ressort hélicoïdal, 22.

Ici, et tel qu'illustré aux figures 4 et 5, le ressort hélicoïdal, 22 et l'organe de sortie 25 sont maintenus en position axialement entre le premier plateau 30 de l'organe d'entrée 24 et un deuxième plateau 32 d'un capot 33.

Ici, et tel qu'illustré à la figure 4, le deuxième plateau 32 du capot 33 comprend une entretoise 34, disposée diamétralement à l'opposé de la dent d'entraînement 31 du première plateau 30 par rapport à l'axe de rotation X lorsque le frein à ressort 15 est assemblé. L'entretoise 34 du deuxième plateau 32 du capot 33 permet ainsi de maintenir un écartement axial entre les premier et deuxième plateaux 30, 32.

Dans un autre mode de réalisation non représenté, le premier plateau 30 de l'organe d'entrée 24 peut comprendre l'entretoise 34.

Ici et tel qu'illustré aux figures 4 et 5, les premier et deuxième plateaux 30, 32 comprennent chacun une collerette périphérique 35, 36. Les deux collerettes périphériques 35, 36 sont disposées en vis-à-vis l'une de l'autre suivant l'axe de rotation X du frein à ressort 15.

Les premier et deuxième plateaux 30, 32 sont solidaires en rotation autour de l'axe de rotation X du frein à ressort 15.

Dans un mode de réalisation, les premier et deuxième plateaux 30, 32 peuvent être maintenus solidaires en rotation autour de l'axe de rotation X du frein à ressort 15 par simple emboîtement.

Dans un autre mode de réalisation, les premier et deuxième plateaux 30, 32 peuvent être maintenus solidaires en rotation autour de l'axe de rotation X du frein à ressort 15 par fixation au moyen d'un élément de fixation, tel qu'une vis de fixation.

L'organe de sortie 25 est relié à l'écran 2 du dispositif d'occultation 3.

Dans le mode de réalisation illustré aux figures 4 et 5, l'organe de sortie 25 comprend deux oreilles 39. Les oreilles 39 de l'organe de sortie 25 sont insérées à l'intérieur du ressort hélicoïdal 22, lorsque le frein à ressort 15 est assemblé.

Les oreilles 39 de l'organe de sortie 25 comprennent respectivement un évidement 40. L'évidement 40 de chacune des oreilles 39 de l'organe de sortie 25 coopère avec l'une des pattes 29 du ressort hélicoïdal 22.

Les oreilles 39 de l'organe de sortie 25 comprennent, en outre, respectivement un élément en saillie 45. L'élément en saillie 45 de chacune des oreilles 39 de l'organe de sortie 25 s'étend suivant l'axe de rotation X du frein à ressort 15, et en particulier vers l'organe d'entrée 24 lorsque le frein à ressort 15 est assemblé. L'élément en saillie 45 de chacune des oreilles 39 de l'organe de sortie 25 coopère avec une lumière 46 de l'organe d'entrée 24, lorsque le frein à ressort 15 est assemblé.

Dans un mode de réalisation, la face périphérique de l'élément en saillie 45 de l'une des oreilles 39 de l'organe de sortie 25 peut être mise en contact avec le contour de la lumière 46 correspondante de l'organe d'entrée 24 lorsque l'une des faces d'entraînement 38 de la dent d'entraînement 31 de l'organe d'entrée 24 est en contact avec la face de l'oreille 39 correspondante de l'organe de sortie 25.

Ici, et tel qu'illustré aux figures 4 et 5, l'organe de sortie 25 est centré par rapport à l'organe d'entrée 24 au moyen d'un axe 47. L'axe 47 est inséré d'une part dans un alésage 48 de l'organe de sortie 25 et dans un alésage 49 de l'organe d'entrée 24.

L'organe d'entrée 24, en particulier la dent d'entraînement 31, coopère avec au moins l'une des pattes 29 du ressort hélicoïdal 22 de sorte à entraîner en rotation le ressort hélicoïdal 22 autour de l'axe de rotation X du frein à ressort 15 dans un premier sens de rotation.

Un tel mouvement libère le frein à ressort 15.

Et l'effort de frottement entre au moins une spire du ressort hélicoïdal 22 et la surface interne de frottement 27 du logement 26 du tambour 23 est diminué lors de l'entraînement en rotation du ressort hélicoïdal 22 dans le premier sens de rotation.

Autrement dit, ce mouvement tend à diminuer le diamètre de l'enveloppe externe du ressort hélicoïdal 22 et donc à diminuer la contrainte radiale entre le ressort hélicoïdal 22 et la surface interne de frottement 27 du logement 26 du tambour 23.

Ainsi, le mouvement généré par le moteur électrique 12 peut être transmis de l'organe d'entrée 24 à l'organe de sortie 25.

L'enveloppe externe du ressort hélicoïdal 22 est définie par les génératrices externes des spires du ressort hélicoïdal 22.

L'organe de sortie 25, en particulier l'une des oreilles 39, coopère avec au moins l'une des pattes 29 du ressort hélicoïdal 22 de sorte à entraîner en rotation le ressort hélicoïdal 22 autour de l'axe de rotation X du frein à ressort 15 dans un deuxième sens de rotation.

Un tel mouvement active le frein à ressort 15, c'est-à-dire tend à bloquer ou à freiner la rotation du ressort hélicoïdal 22 à l'intérieur du logement 26 du tambour rotatif 23.

Et l'effort de frottement entre au moins une spire du ressort hélicoïdal 22 et la surface interne de frottement 27 du logement 26 du tambour 23 est augmenté lors de l'entraînement en rotation du ressort hélicoïdal 22 dans le deuxième sens de rotation.

Autrement dit, ce mouvement tend à augmenter le diamètre de l'enveloppe externe du ressort hélicoïdal 22, en particulier par le rapprochement des pattes 29 du ressort hélicoïdal 22, et donc à augmenter la contrainte radiale entre le ressort hélicoïdal 22 et la surface interne de frottement 27 du logement 26 du tambour 23.

Comme illustré aux figures 4 à 7, le frein à ressort 15 comprend également une bague 50 disposée entre une surface externe 51 de l'organe d'entrée 24 et la surface interne de frottement 27 du logement 26 du tambour 23.

Ainsi, la bague 50 disposée entre la surface externe 51 de l'organe d'entrée 24 et la surface interne de frottement 27 du logement 26 du tambour 23 permet de réduire les bruits de fonctionnement du frein à ressort 15 lors de l'entraînement en rotation de l'organe d'entrée 24 et/ou de l'organe de sortie 25 à l'intérieur du logement 26 du tambour 23.

De cette manière, la bague 50 permet de s'affranchir des bruits de fonctionnement du frein à ressort 15 liés aux frottements de la surface externe 51 de l'organe d'entrée 24 contre la surface interne de frottement 27 du logement 26 du tambour 23 puisque l'organe d'entrée 24 ne peut plus être en contact direct avec la surface interne de frottement 27 du logement 26 du tambour 23, suivant une direction radiale.

Par conséquent, la bague 50 disposée entre la surface externe 51 de l'organe d'entrée 24 et la surface interne de frottement 27 du logement 26 du tambour 23 permet le coulissement sans contact direct de l'organe d'entrée 24 contre le logement 26 du tambour 23, lors de l'entraînement en rotation de l'organe d'entrée 24 par rapport au logement 26 du tambour 23.

De cette manière, la bague 50 disposée entre la surface externe 51 de l'organe d'entrée 24 et la surface interne de frottement 27 du logement 26 du tambour 23 sert de palier entre l'organe d'entrée 24 et le logement 26 du tambour 23.

En outre, la bague 50 disposée entre la surface externe 51 de l'organe d'entrée 24 et la surface interne de frottement 27 du logement 26 du tambour 23 permet de rattraper les défauts d'alignement de l'organe d'entrée 24 et/ou de l'organe de sortie 25 par rapport à l'axe de rotation X du frein à ressort 15, de sorte à éviter la mise en contact de l'organe d'entrée 24 et de l'organe de sortie 25 avec la surface interne de frottement 27 du logement 26 du tambour 23 pouvant générer des bruits de fonctionnement du frein à ressort 15.

Dans un autre mode de réalisation non représenté, le frein à ressort 15 comprend une bague 50 disposée entre une surface externe 52 de l'organe de sortie 25 et la surface interne de frottement 27 du logement 26 du tambour 23 en remplacement de la bague 50 disposée entre la surface externe 51 de l'organe d'entrée 24 et la surface interne de frottement 27 du logement 26 du tambour 23.

De manière similaire au mode de réalisation représenté aux figures 4 à 7, la bague 50 disposée entre la surface externe 52 de l'organe de sortie 25 et la surface interne de frottement 27 du logement 26 du tambour 23 permet de réduire les bruits de fonctionnement du frein à ressort 15 lors de l'entraînement en rotation de l'organe d'entrée 24 et/ou de l'organe de sortie 25 à l'intérieur du logement 26 du tambour 23.

Dans ce cas, la bague 50 disposée entre la surface externe 52 de l'organe de sortie 25 et la surface interne de frottement 27 du logement 26 du tambour 23 permet de rattraper les défauts d'alignement de l'organe de sortie 25 et/ou de l'organe d'entrée 24 par rapport à l'axe de rotation X du frein à ressort 15, de sorte à éviter la mise en contact de l'organe d'entrée 24 et de l'organe de sortie 25 avec la surface interne de frottement 27 du logement 26 du tambour 23 pouvant générer des bruits de fonctionnement du frein à ressort 15.

Dans un autre mode de réalisation non représenté, le frein à ressort 15 comprend une première bague 50 disposée entre une surface externe 51 de l'organe d'entrée 24 et la surface interne de frottement 27 du logement 26 du tambour 23, et une deuxième bague 50 disposée entre une surface externe 52 de l'organe de sortie 25 et la surface interne de frottement 27 du logement 26 du tambour 23.

De manière similaire aux deux modes de réalisation précédents, les première et deuxième bagues 50 disposées respectivement d'une part entre la surface externe 51 de l'organe d'entrée 24 et la surface interne de frottement 27 du logement 26 du tambour 23, et d'autre part entre la surface externe 52 de l'organe de sortie 25 et la surface interne de frottement 27 du logement 26 du tambour 23 permettent de réduire les bruits de fonctionnement du frein à ressort 15 lors de l'entraînement en rotation de l'organe d'entrée 24 et/ou de l'organe de sortie 25 à l'intérieur du logement 26 du tambour 23.

Dans ce cas, les première et deuxième bagues 50 disposées respectivement d'une part entre la surface externe 51 de l'organe d'entrée 24 et la surface interne de frottement 27 du logement 26 du tambour 23, et d'autre part entre la surface externe 52 de l'organe de sortie 25 et la surface interne de frottement 27 du logement 26 du tambour 23 permettent de rattraper les défauts d'alignement de l'organe d'entrée 24 et de l'organe de sortie 25 par rapport à l'axe de rotation X du frein à ressort 15 de sorte à éviter la mise en contact de l'organe d'entrée 24 et de l'organe de sortie 25 avec la surface interne de frottement 27 du logement 26 du tambour 23 pouvant générer des bruits de fonctionnement du frein à ressort 15.

Pratiquement, quel que soit le mode de réalisation, la bague 50 est en matière plastique.

Ainsi, la bague 50 disposée entre la surface externe 51, 52 de l'organe d'entrée 24 et/ou de l'organe de sortie 25 et la surface interne de frottement 27 du logement 26 du tambour 23 permet de réaliser un palier, de sorte à garantir le coulissement entre l'organe d'entrée 24 et/ou l'organe de sortie 25 et le tambour 23 sans contact direct, lors de l'entraînement en rotation de l'organe d'entrée 24 et/ou de l'organe de sortie 25 par rapport au logement 26 du tambour 23.

A titre d'exemple nullement limitatif, la matière plastique de la bague 50 peut être du polyoxyméthylène ou « POM ».

Dans un mode de réalisation, l'organe d'entrée 24 et l'organe de sortie 25 sont réalisés en zamac (acronyme des noms des métaux qui le composent : zinc, aluminium, magnésium et cuivre) et le tambour 23 est réalisé en acier, notamment en acier fritté.

Ainsi, l'utilisation du zamac pour réaliser l'organe d'entrée 24 et l'organe de sortie 25 permet de garantir une bonne précision des dimensions de ces pièces lors de leur fabrication. Et l'utilisation de l'acier fritté pour réaliser le tambour 23 permet de diminuer la résistance au frottement contre la surface interne de frottement 27 du logement 26 du tambour 23.

Avantageusement, l'organe d'entrée 24 comprend un logement 53, où la bague 50 est disposée au niveau du logement 53.

Ainsi, la bague 50 est positionnée axialement par rapport à l'organe d'entrée 24 au moyen du logement 53 suivant l'axe de rotation X du frein à ressort 15.

De manière similaire, dans le mode de réalisation où le frein à ressort 15 comprend une bague 50 disposée entre la surface externe 52 de l'organe de sortie 25 et la surface interne de frottement 27 du logement 26 du tambour 23, l'organe de sortie 25 comprend un logement non représenté, où la bague 50 est disposée au niveau du logement.

Préférentiellement, le logement 53 ou équivalent de l'organe d'entrée 24 et/ou de l'organe de sortie 25 est un épaulement.

Dans le mode de réalisation illustré aux figures 4 à 7, la bague 50 est maintenue en position suivant l'axe de rotation X du frein à ressort 15 entre l'épaulement 53 de l'organe d'entrée 24 et un épaulement 54 du tambour 23.

Ainsi, la bague 50 est maintenue en position suivant l'axe de rotation X du frein à ressort 15 entre un premier épaulement 53 de l'organe d'entrée 24 et un deuxième épaulement 54 du tambour 23.

De manière similaire, dans le mode de réalisation où le frein à ressort 15 comprend une bague 50 disposée entre la surface externe 52 de l'organe de sortie 25 et la surface interne de frottement 27 du logement 26 du tambour 23, la bague 50 est maintenue en position suivant l'axe de rotation X du frein à ressort 15 entre l'épaulement de l'organe de sortie 25 et un épaulement du tambour 23.

Avantageusement, la bague 50 présente une épaisseur L1 supérieure à la profondeur L2 du logement 53 ménagé dans l'organe d'entrée 24, suivant l'axe de rotation X du frein à ressort 15.

Et l'une des faces latérales de la bague 50 coopère avec l'épaulement 54 du tambour 23, en particulier avec une face latérale de l'épaulement 54 du tambour 23, la face latérale de l'épaulement 54 du tambour 23 étant orthogonale à l'axe de rotation X du frein à ressort 15.

Ainsi, le dépassement de l'épaisseur L1 de la bague 50 par rapport à la profondeur L2 du logement 53 ménagé dans l'organe d'entrée 24 permet d'éviter un contact direct entre l'organe d'entrée 24 et le tambour 23 suivant une direction axiale, et par conséquent de réduire les bruits de fonctionnement du frein à ressort 15 lors de l'entraînement en rotation de l'organe d'entrée 24 à l'intérieur du logement 26 du tambour 23.

De cette manière, la bague 50 permet de s'affranchir des bruits de fonctionnement du frein à ressort 15 liés aux frottements de la surface externe du premier plateau 30 de l'organe d'entrée 24 contre l'épaulement 54 du tambour 23 puisque l'organe d'entrée 24 ne peut plus être en contact direct avec l'épaulement 54 du tambour 23, suivant une direction axiale.

Par conséquent, la bague 50 disposée entre la surface externe du premier plateau 30 de l'organe d'entrée 24 et l'épaulement 54 du tambour 23 permet également le coulissement sans contact direct de l'organe d'entrée 24 contre le logement 26 du tambour 23, lors de l'entraînement en rotation de l'organe d'entrée 24 par rapport au logement 26 du tambour 23.

De manière similaire, dans le mode de réalisation où le frein à ressort 15 comprend une bague 50 disposée entre la surface externe 52 de l'organe de sortie 25 et la surface interne de frottement 27 du logement 26 du tambour 23, la bague 50 présente une épaisseur supérieure à la profondeur du logement ménagé dans l'organe de sortie 25, suivant l'axe de rotation X du frein à ressort 15.

Et l'une des faces latérales de la bague 50 coopère avec l'épaulement du tambour 23, en particulier avec une face latérale de l'épaulement du tambour 23, la face latérale de l'épaulement du tambour 23 étant orthogonale à l'axe de rotation X du frein à ressort 15.

Avantageusement, la bague 50 comprend un élément de blocage en rotation 55. L'élément de blocage en rotation 55 de la bague 50 coopère avec une ouverture 56 ménagée dans l'organe d'entrée 24.

Ainsi, le dispositif anti-rotation de la bague 50 par rapport à l'organe d'entrée 24 permet d'éviter une usure prématurée de la bague 50 liée à un frottement de la bague 50 sur la surface externe 51 de l'organe d'entrée 24, en particulier lorsque l'organe d'entrée 24 est réalisé dans une matière telle que du zamac.

Ici, et tel qu'illustré aux figures 4 à 7, l'élément de blocage en rotation 55 de la bague 50 est une languette s'étendant depuis l'anneau constituant la bague 50 vers le centre de la bague 50. Et l'ouverture 56 ménagée dans l'organe d'entrée 24, en particulier dans le premier plateau 30, coopère avec la languette formant l'élément de blocage en rotation 55 de la bague 50.

De manière similaire, dans le mode de réalisation où le frein à ressort 15 comprend une bague 50 disposée entre la surface externe 52 de l'organe de sortie 25 et la surface interne de frottement 27 du logement 26 du tambour 23, la bague 50 comprend un élément de blocage en rotation non représenté. L'élément de blocage en rotation de la bague 50 coopère avec une ouverture ménagée dans l'organe d'entrée 25.

Pratiquement, le tambour 23, l'organe d'entrée 24 et l'organe de sortie 25 sont des pièces de révolution.

Le diamètre externe de la ou des bagues 50 est supérieur au diamètre externe de l'organe d'entrée 24 et au diamètre externe de l'organe de sortie 25.

Ainsi, la ou les bagues 50 disposées entre la surface externe 51 de l'organe d'entrée 24 et la surface interne de frottement 27 du logement 26 du tambour 23 et/ou entre la surface externe 52 de l'organe de sortie 25 et la surface interne de frottement 27 du logement 26 du tambour 23 permettent d'éviter le contact direct entre l'organe d'entrée 24 et le logement 26 du tambour 23 et entre l'organe de sortie 25 et le logement 26 du tambour 23 en interposant la ou les bagues 50 entre eux.

De cette manière, la liaison de pivot entre l'organe d'entrée 24 et le logement 26 du tambour 23 et entre l'organe de sortie 25 et le logement 26 du tambour 23 est mise en oeuvre par l'intermédiaire de la ou des bagues 50, de sorte à garantir un coulissement limitant les bruits de fonctionnement du frein à ressort 15 lors de l'entraînement en rotation de l'organe d'entrée 24 et/ou de l'organe de sortie 25 à l'intérieur du logement 26 du tambour 23.

Dans un mode de réalisation, le diamètre interne du logement 26 du tambour 23 au niveau de la surface interne de frottement 27 du logement 26 du tambour 23 est supérieur au diamètre externe de la ou des bagues 50.

Ainsi, la ou les bagues 50 peuvent être montées avec un ajustement libre à l'intérieur du logement 26 du tambour 23.

Dans un autre mode de réalisation, le diamètre interne du logement 26 du tambour 23 au niveau de la surface interne de frottement 27 du logement 26 du tambour 23 est inférieur au diamètre externe de la ou des bagues 50.

Ainsi, la ou les bagues 50 peuvent être montées avec un ajustement serré à l'intérieur du logement 26 du tambour 23.

De cette manière, un jeu de fonctionnement du frein à ressort 15 est supprimé.

Par conséquent, la ou les bagues 50 peuvent être pré-montées à l'intérieur du logement 26 du tambour 23 de sorte à éviter le retrait de la bague 50 suivant la direction de l'axe de rotation X du frein à ressort 15.

Grâce à la présente invention, la ou les bagues disposées entre la surface externe de l'organe d'entrée et/ou de l'organe de sortie et la surface interne de frottement du logement du tambour permettent de réduire les bruits de fonctionnement du frein à ressort lors de l'entraînement en rotation de l'organe d'entrée et/ou de l'organe de sortie à l'intérieur du logement du tambour.

En guise de modification pouvant être apportée aux exemples de réalisation décrits précédemment, la bague peut être rapportée sur ou faire partie intégrante de l'organe d'entrée et/ou de l'organe de sortie, notamment dans le cas d'un actionneur électromécanique ayant un moteur électrique fournissant un faible couple. Dans un tel cas, la bague et l'organe d'entrée et/ou l'organe de sortie forment un seul sous-ensemble ou une seule pièce, par exemple en matière plastique.

Les modes de réalisation et variantes mentionnés ci-dessus peuvent être combinés pour générer de nouveaux modes de réalisation de l'invention.

## Revendications

1. Actionneur électromécanique (11) pour une installation domotique de fermeture ou de protection solaire comprenant un moteur électrique (12), un réducteur (14), un frein à ressort (15), ledit frein à ressort (15) comprenant :
- un ressort hélicoïdal (22) ;
- un tambour (23),
▪ où le tambour (23) comporte un logement (26), et
▪ où une surface interne de frottement (27) du logement (26) du tambour (23) coopère avec au moins une spire du ressort hélicoïdal (22) ;
- un organe d'entrée (24) ;
- un organe de sortie (25) ;
**caractérisé en ce que** le frein à ressort (15) comprend également au moins une bague (50) disposée entre une surface externe (51, 52) de l'organe d'entrée (24) et/ou de l'organe de sortie (25) et la surface interne de frottement (27) du logement (26) du tambour (23).

2. Actionneur électromécanique (11) pour une installation domotique de fermeture ou de protection solaire selon la revendication 1, **caractérisé en ce que** ladite au moins une bague (50) est en matière plastique.

3. Actionneur électromécanique (11) pour une installation domotique de fermeture ou de protection solaire selon la revendication 1 ou la revendication 2, **caractérisé en ce que** l'organe d'entrée (24) et/ou l'organe de sortie (25) comprend un logement (53), et **en ce que** ladite au moins une bague (50) est disposée au niveau dudit logement (53).

4. Actionneur électromécanique (11) pour une installation domotique de fermeture ou de protection solaire selon la revendication 3, **caractérisé en ce que** le logement (53) de l'organe d'entrée (24) et/ou de l'organe de sortie (25) est un épaulement, et **en ce que** ladite au moins une bague (50) est maintenue en position suivant l'axe de rotation (X) du frein à ressort (15) entre l'épaulement (53) de l'organe d'entrée (24) et/ou de l'organe de sortie (25) et un épaulement (54) du tambour (23).

5. Actionneur électromécanique (11) pour une installation domotique de fermeture ou de protection solaire selon la revendication 4, **caractérisé en ce que** ladite au moins une bague (50) présente une épaisseur (L1) supérieure à la profondeur (L2) du logement (53) ménagé dans l'organe d'entrée (24) et/ou dans l'organe de sortie (25) et **en ce que** l'une des faces latérales de la bague (50) coopère avec l'épaulement (54) du tambour (23).

6. Actionneur électromécanique (11) pour une installation domotique de fermeture ou de protection solaire selon l'une quelconque des revendications 1 à 5, **caractérisé en ce que** ladite au moins une bague (50) comprend un élément de blocage en rotation (55), et **en ce que** l'élément de blocage en rotation (55) de ladite au moins une bague (50) coopère avec une ouverture (56) ménagée dans l'organe d'entrée (24) et/ou l'organe de sortie (25).

7. Actionneur électromécanique (11) pour une installation domotique de fermeture ou de protection solaire selon l'une quelconque des revendications 1 à 6, **caractérisé en ce que** le tambour (23), l'organe d'entrée (24) et l'organe de sortie (25) sont des pièces de révolution, et **en ce que** le diamètre externe de ladite au moins une bague (50) est supérieur aux diamètres externes de l'organe d'entrée (24) et de l'organe de sortie (25).

8. Actionneur électromécanique (11) pour une installation domotique de fermeture ou de protection solaire selon l'une quelconque des revendications 1 à 7, **caractérisé en ce que** l'organe d'entrée (24) et l'organe de sortie (25) sont réalisés en zamac et le tambour (23) est réalisé en acier, notamment en acier fritté.

9. Actionneur électromécanique (11) pour une installation domotique de fermeture ou de protection solaire selon l'une quelconque des revendications 1 à 8, **caractérisé en ce que** le diamètre interne du logement (26) du tambour (23) au niveau de la surface interne de frottement (27) du logement (26) du tambour (23) est supérieur au diamètre externe de ladite au moins une bague (50).

10. Installation domotique de fermeture ou de protection solaire comprenant un écran (2) enroulable sur un tube d'enroulement (4) entraîné en rotation par un actionneur électromécanique (11), **caractérisée en ce que** l'actionneur électromécanique (11) est conforme à l'une quelconque des revendications 1 à 9.

## Patentansprüche

1. Elektromechanische Stellvorrichtung (11) für eine im Haus verwendete Verschluss- oder Sonnenschutzeinrichtung, einen elektrischen Motor (12), ein Untersetzungsgetriebe (14) und eine Federbremse (15) umfassen, wobei die Federbremse (14) umfasst:
- eine Spiralfeder (22);
- eine Trommel (23),
▪ wobei die Trommel (23) einen Aufnahmeraum (26) aufweist, und
▪ wobei eine Reibungsinnenfläche (27) des Aufnahmeraums (26) der Trommel (23) mit mindestens einer Windung der Spiralfeder (22) zusammenarbeitet;
- ein Eingangselement (24);
- ein Ausgangselement (25);
**dadurch gekennzeichnet, dass** die Federbremse (15) gleichfalls mindestens einen Ring (50) aufweist, der zwischen einer Außenfläche (51, 52) des Eingangselements (24) und/oder des Ausgangselements (25) und der Reibungsinnenfläche (27) des Aufnahmeraums (26) der Trommel (23) angeordnet ist.

2. Elektromechanische Stellvorrichtung (11) für eine im Haus verwendete Verschluss- oder Sonnenschutzeinrichtung nach Anspruch 1, **dadurch gekennzeichnet, dass** der mindestens eine Ring (50) aus Kunststoff besteht.

3. Elektromechanische Stellvorrichtung (11) für eine im Haus verwendete Verschluss- oder Sonnenschutzeinrichtung nach Anspruch 1 oder Anspruch 2, **dadurch gekennzeichnet, dass** das Eingangselement (24) und/oder Ausgangselement (25) einen Sitz (53) aufweist und dass der mindestens eine Ring (50) in dem Sitz (53) angeordnet ist.

4. Elektromechanische Stellvorrichtung (11) für eine im Haus verwendete Verschluss- oder Sonnenschutzeinrichtung nach Anspruch 3, **dadurch gekennzeichnet, dass** der Sitz (53) des Eingangselements (24) und/oder des Ausgangselements (25) eine Schulter ist und dass der mindestens eine Ring (50) gemäß der Drehachse (X) der Federbremse (15) zwischen der Schulter (53) des Eingangselements (24) und/oder des Ausgangselements (25) und einer Schulter (54) der Trommel (23) in Position gehalten wird.

5. Elektromechanische Stellvorrichtung (11) für eine im Haus verwendete Verschluss- oder Sonnenschutzeinrichtung nach Anspruch 4, **dadurch gekennzeichnet, dass** der mindestens eine Ring (50) eine Dicke (L1) aufweist, die größer ist als die Tiefe (L2) des in dem Eingangselement (24) und/oder dem Ausgangselement (25) eingearbeiteten Sitzes (53) ist und dass eine der Seitenflächen des Rings (50) mit der Schulter (54) der Trommel (23) zusammenarbeitet.

6. Elektromechanische Stellvorrichtung (11) für eine im Haus verwendete Verschluss- oder Sonnenschutzeinrichtung nach einem beliebigen der Ansprüche 1 bis 5, **dadurch gekennzeichnet, dass** der mindestens eine Ring (50) ein Element (55) zur Dreharretierung aufweist und dass das Element (55) zur Dreharretierung des mindestens einen Rings (50) mit einer Öffnung (56) zusammenarbeitet, die in dem Eingangselement (24) und/oder dem Ausgangselement (25) eingearbeitet ist.

7. Elektromechanische Stellvorrichtung (11) für eine im Haus verwendete Verschluss- oder Sonnenschutzeinrichtung nach einem beliebigen der Ansprüche 1 bis 6, **dadurch gekennzeichnet, dass** die Trommel (23), das Eingangselement (24) und das Ausgangselement (25) Drehteile sind, und dass der Außendurchmesser des mindestens einen Rings (50) größer als die Außendurchmesser des Eingangselements (24) und des Ausgangselements (25) ist.

8. Elektromechanische Stellvorrichtung (11) für eine im Haus verwendete Verschluss- oder Sonnenschutzeinrichtung nach einem beliebigen der Ansprüche 1 bis 7, **dadurch gekennzeichnet, dass** das Eingangselement (24) und das Ausgangselement (25) aus einer Zamak-Legierung hergestellt sind und die Trommel (23) aus Stahl, insbesondere gesintertem Stahl hergestellt ist.

9. Elektromechanische Stellvorrichtung (11) für eine im Haus verwendete Verschluss- oder Sonnenschutzeinrichtung nach einem beliebigen der Ansprüche 1 bis 8, **dadurch gekennzeichnet, dass** der Innendurchmesser des Aufnahmeraums (26) der Trommel (23) an der Reibungsinnenfläche (27) des Aufnahmeraums (26) der Trommel (23) größer ist als der Außendurchmesser des mindestens einen Rings (50).

10. Im Haus verwendete Verschluss- oder Sonnenschutzeinrichtung, einen auf ein Wickelrohr (4) wickelbaren Schirm (2) umfassend, der durch eine elektromechanische Stellvorrichtung (11) zur Drehung angetrieben wird, **dadurch gekennzeichnet, dass** die elektromechanische Stellvorrichtung (11) entsprechend einem beliebigen der Ansprüche 1 bis 9 ausgebildet ist.

## Claims

1. An electromechanical actuator (11) for a home automation closing or sun protection installation comprising an electric motor (12), a reduction gear (14) and a spring-loaded brake (15), said spring-loaded brake (15) comprising:
- a helical spring (22);
- a drum (23);
▪ where the drum (23) comprises a housing (26), and
▪ where an inner friction surface (27) of the housing (26) of the drum (23) cooperates with at least one turn of the helical spring (22);
- an input member (24);
- an output member (25);
**characterized in that** the spring-loaded brake (15) also comprises at least one ring (50) positioned between an outer surface (51, 52) of the input member (24) and/or the output member (25) and the inner friction surface (27) of the housing (26) of the drum (23).

2. The electromechanical actuator (11) for a home automation closing or sun protection installation according to claim 1, **characterized in that** said at least one ring (50) is made from plastic material.

3. The electromechanical actuator (11) for a home automation closing or sun protection installation according to claim 1 or to claim 2, **characterized in that** the input member (24) and/or the output member (25) comprises a housing (53), and **in that** said at least one ring (50) is positioned at said housing (53).

4. The electromechanical actuator (11) for a home automation closing or sun protection installation according to claim 3, **characterized in that** the housing (53) of the input member (24) and/or the output member (25) is a shoulder, and **in that** said at least one ring (50) is kept in position along the axis of rotation (X) of the spring-loaded brake (15) between the shoulder (53) of the input member (24) and/or the output member (25) and a shoulder (54) of the drum (23).

5. The electromechanical actuator (11) for a home automation closing or sun protection installation according to claim 4, **characterized in that** said at least one ring (50) has a thickness (L1) greater than the depth (L2) of the housing (53) arranged in the input member (24) and/or in the output member (25) and **in that** one of the side faces of the ring (50) cooperates with the shoulder (54) of the drum (23).

6. The electromechanical actuator (11) for a home automation closing or sun protection installation according to any one of claims 1 to 5, **characterized in that** said at least one ring (50) comprises a rotational locking element (55), and **in that** the rotational locking element (55) of said at least one ring (50) cooperates with an opening (56) arranged in the input member (24) and/or the output member (25).

7. The electromechanical actuator (11) for a home automation closing or sun protection installation according to any one of claims 1 to 6, **characterized in that** the drum (23), the input member (24) and the output member (25) are parts of revolution, and **in that** the outer diameter of said at least one ring (50) is larger than the outer diameters of the input member (24) and the output member (25).

8. The electromechanical actuator (11) for a home automation closing or sun protection installation according to any one of claims 1 to 7, **characterized in that** the input member (24) and the output member (25) are made from zamac and the drum (23) is made from steel, in particular sintered steel.

9. The electromechanical actuator (11) for a home automation closing or sun protection installation according to any one of claims 1 to 8, **characterized in that** the inner diameter of the housing (26) of the drum (23) at the inner friction surface (27) of the housing (26) of the drum (23) is larger than the outer diameter of said at least one ring (50).

10. A home automation installation for closing or providing sun protection that comprises a screen (2) able to be wound on a winding tube (4) rotated by an electromechanical actuator (11), **characterized in that** the electromechanical actuator (11) is according to any one of claims 1 to 9.
